# DEMANDE DE BREVET EUROPEEN

(11) **EP 2 469 904 A1**
(43) Date de publication de la demande: **27.06.2012**
(21) Numéro de dépôt: 11193751.2
(22) Date de dépôt: 15.12.2011
(51) Int. Cl.: H04W 12/08, H04L 29/06, H04W 12/06

(54) **Dispositif électronique et procédé de communication**

(30) Priorité: 21.12.2010 FR 1060928
(71) Demandeur: Oberthur Technologies, 92300 Levallois-Perret (FR)
(72) Inventeur: Bertin, Marc, 92000 Nanterre (FR)
(74) Mandataire: Pecher, Gilles

(57) **Abrégé**

Dispositif électronique (100) comprenant un module de communication apte à échanger des messages avec une entité externe (200), caractérisé en ce que le module de communication comprend au moins un premier circuit de communication (114, 120, 121) apte échanger des messages en utilisant un premier protocole de communication et un deuxième circuit de communication (114, 120, 121) apte à échanger des messages en utilisant un deuxième protocole de communication différent du premier protocole de communication.

## Description

### Arrière plan de l'invention

La présente invention se rapporte au domaine des dispositifs électroniques portables, notamment permettant de mémoriser des données personnelles et de communiquer avec d'autres dispositifs électroniques.

Il existe de nombreux dispositifs portables offrant des fonctionnalités variées à leurs utilisateurs : Téléphone mobile, lecteur multimédia, puce électronique intégrée dans une carte d'accès ou de paiement,...

Chaque fonctionnalité que peut offrir un dispositif électronique portable implique certaines contraintes.

Par exemple, lors de l'utilisation d'un dispositif électronique de type carte d'accès ou de paiement sans contact, on souhaite que l'accès ou le paiement soit validé par l'utilisateur en positionnant sa carte à proximité immédiate d'un lecteur de carte. Pour répondre à cette contrainte, la carte est donc équipée d'un circuit de communication courte portée (de type NFC pour « Near Field Communication »).

Au contraire, dans le cas d'un lecteur multimédia notamment, on souhaite pouvoir lire ou écrire des données multimédia depuis un dispositif externe, par exemple un ordinateur personnel, même si le lecteur multimédia est relativement éloigné. Pour répondre à cette contrainte, le lecteur multimédia est donc équipée d'un circuit de communication moyenne portée, de portée supérieure au circuit de communication courte portée précité.

Ainsi, un dispositif électronique portable est généralement conçu en fonction des contraintes d'une unique fonctionnalité (par exemple, carte d'accès ou lecteur multimédia) ou des contraintes d'un nombre limité de fonctionnalité (par exemple, téléphone mobile permettant également un stockage de données et intégrant un lecteur multimédia).

### Objet et description succincte de l'invention

La présente invention a pour objet de pallier ces inconvénients en proposant une solution permettant à un dispositif portable d'offrir de nombreuses fonctionnalités variées à son utilisateur.

A cet effet, l'invention concerne un dispositif électronique comprenant un module de communication apte à échanger des messages avec une entité externe. Le module de communication comprend au moins un premier circuit de communication apte échanger des messages en utilisant un premier protocole de communication et un deuxième circuit de communication apte à échanger des messages en utilisant un deuxième protocole de communication différent du premier protocole de communication.

Corrélativement, l'invention propose un procédé de communication mis en oeuvre par un dispositif électronique comprenant un module de communication apte à échanger des messages avec une entité externe, caractérisé en ce que le module de communication comprend au moins un premier circuit de communication apte échanger des messages en utilisant un premier protocole de communication et un deuxième circuit de communication apte à échanger des messages en utilisant un deuxième protocole de communication différent du premier protocole de communication, le procédé de communication comprenant un échange de messages avec une entité externe en utilisant le premier ou le deuxième circuit de communication.

Ainsi, l'invention permet à un même dispositif électronique de mettre en oeuvre d'une part des fonctionnalités impliquant des contraintes vérifiées par le premier module de communication et d'autres fonctionnalités impliquant des contraintes vérifiées par le deuxième module de communication. Par exemple, le premier module de communication est un module courte portée et le deuxième module de communication est un module moyenne portée.

Selon un premier aspect, le dispositif électronique comprend :
- un module d'acquisition de données d'authentification introduites par un utilisateur,
- une unité de traitement apte à déterminer un indicateur d'authentification de l'utilisateur en fonction desdites données d'authentification, et
- un module d'exécution d'une action sécurisée configuré pour exécuter ladite action sécurisée uniquement si ledit indicateur d'authentification de l'utilisateur présente une valeur prédéterminée.

Corrélativement, le procédé de communication peut comprendre :
- une étape d'acquisition de données d'authentification introduites par un utilisateur,
- une étape de détermination d'un indicateur d'authentification de l'utilisateur en fonction desdites données d'authentification, et
- un étape d'exécution d'une action sécurisée si ledit indicateur d'authentification de l'utilisateur présente une valeur prédéterminée.

Grâce à ces caractéristiques, l'utilisateur du dispositif électronique peut contrôler l'exécution de l'action sécurisée. En effet, l'action sécurisée n'est exécutée que si l'utilisateur a introduit des données d'authentification correctes. On évite ainsi qu'un tiers ou une entité externe commande l'exécution de l'action sécurisée sans l'accord de l'utilisateur.

L'action sécurisée peut comprendre une communication, par ledit module de communication, avec une entité externe.

Cette communication peut comprendre l'envoi de données mémorisées dans une mémoire accessible au dispositif électronique vers une station hôte apte à afficher lesdites données.

Dans ce cas, l'entité externe ne peut pas obtenir les données du dispositif électronique sans l'accord de l'utilisateur.

Le dispositif électronique peut comprendre un module d'affichage apte à afficher le nombre de stations hôtes détectées par le module de communication.

Cette communication peut également comprendre l'envoi d'un message cryptographique vers une station hôte.

Le message cryptographique peut notamment servir à authentifier le dispositif électronique.

L'invention concerne aussi un système comprenant un dispositif électronique conforme à l'invention et une station hôte, dans lequel la station hôte comprend :
- un module de réception du message cryptographique,
- un module d'évaluation d'un indicateur d'authentification du dispositif électronique en fonction du message cryptographique, et
- un module d'exécution d'une deuxième action sécurisée configuré pour exécuter ladite deuxième action sécurisée uniquement si ledit indicateur d'authentification du dispositif électronique présente une valeur prédéterminée.

Dans ce cas, la station hôte effectue une action sécurisée lorsque le dispositif électronique est authentifié, l'authentification du dispositif électronique nécessitant au préalable l'authentification de l'utilisateur. Cette double authentification permet une sécurité accrue.

Selon un exemple d'utilisation, la deuxième action sécurisée comprend la commande de l'ouverture d'un passage présentant un état fermé et un état ouvert.

Ainsi, le dispositif électronique peut servir de carte d'accès.

L'invention concerne aussi un système comprenant un premier dispositif électronique conforme à l'invention et un deuxième dispositif électronique, dans lequel l'action sécurisée du premier dispositif électronique comprend l'envoi d'un message d'authentification au deuxième dispositif électronique, le deuxième dispositif électronique comprenant un module d'exécution d'une action sécurisée configuré pour exécuter ladite action sécurisée en réponse à la réception dudit message d'authentification.
Corrélativement, un dispositif électronique conforme à l'invention peut comprendre :
- un module d'envoi d'un message d'interrogation d'authentification,
- un module de réception d'un message d'authentification,
- un module d'exécution d'une action sécurisée configuré pour exécuter ladite action sécurisée en réponse à la réception dudit message d'authentification.

Dans ce cas, l'utilisateur d'un premier dispositif électronique peut contrôler l'exécution d'une action sécurisée par un deuxième dispositif électronique.

Le dispositif électronique peut comprendre une mémoire de masse de capacité égale ou supérieure à 100Mo.

Selon un mode de réalisation, le dispositif électronique comprend :
- un module de détection d'une station hôte (200) en utilisant le premier module de communication (120), et
- un module d'envoi de données vers la station hôte détectée (200) en utilisant le deuxième module de communication (120).

Autrement dit, le premier module de communication peut être utilisé pour apparier le dispositif électronique avec une station hôte, la communication ultérieure entre le dispositif électronique et la station hôte utilisant le deuxième module électronique. Comme déjà discuté, cela permet de s'adapter à différentes contraintes. Par exemple, si le premier module de communication est de type courte portée et le deuxième module de communication est de type moyenne portée, l'utilisateur peut déclencher l'appariement explicitement en positionnant le dispositif électronique près de la station hôte. Toutefois il ne doit pas maintenir le dispositif électronique près de la station hôte lors de la communication ultérieure.

Le dispositif électronique peut être indépendant d'un réseau de téléphonie. Autrement dit, dans ce mode de réalisation, le dispositif électronique n'est pas un téléphone mobile.

Dans un mode particulier de réalisation, les différentes étapes du procédé de communication sont déterminées par des instructions de programmes d'ordinateurs.

En conséquence, l'invention vise aussi un programme d'ordinateur sur un support d'informations, ce programme étant susceptible d'être mis en oeuvre dans un ordinateur ou équivalent, ce programme comportant des instructions adaptées à la mise en oeuvre des étapes d'un procédé de communication tels que décrits ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question (par exemple un circuit ASIC).

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique illustrative d'une architecture ou système dans lequel l'invention est mise en oeuvre conformément à un mode de réalisation,
- la figure 2 est un ordinogramme montrant les étapes réalisées lors d'une authentification d'un utilisateur d'un dispositif électronique conforme à l'invention,
- les figures 3 à 6 sont des diagrammes de flux qui représentent des utilisations d'un dispositif électronique conforme à l'invention.

### Description détaillée des modes de réalisation de l'invention

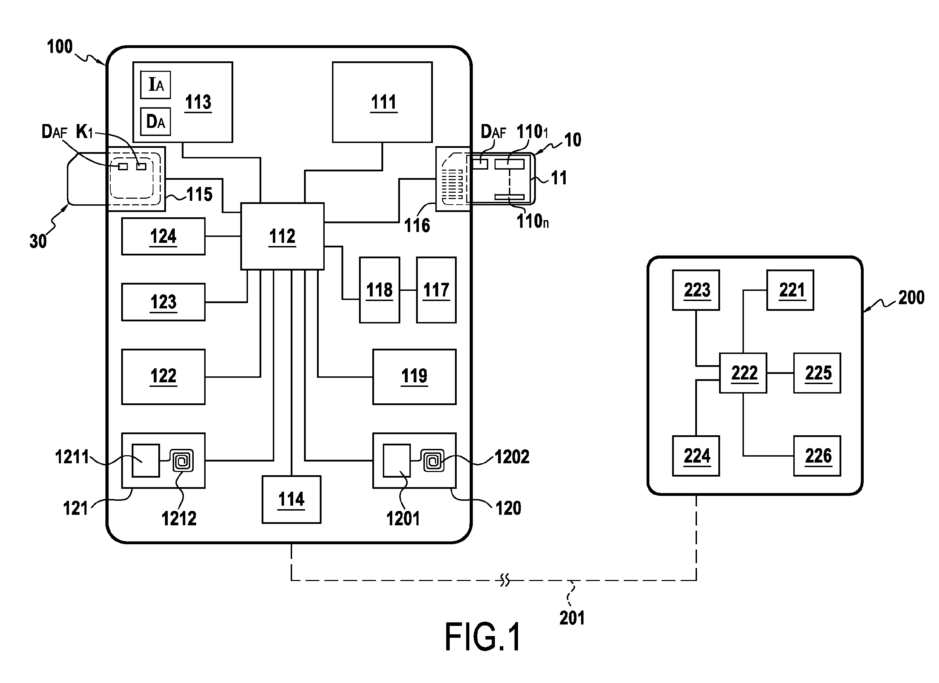

La **figure 1** illustre une architecture ou système dans lequel l'invention peut être mise en oeuvre. Ce système comprend un dispositif électronique 100 et une station hôte 200. Le dispositif électronique 100 intègre une mémoire de masse 10, une carte à microcircuit 30 amovibles.

Comme décrit ci-après en détail, la mémoire de masse 10 amovible, qui peut être une carte microSD comme illustrée sur la figure 1, est connectée au dispositif électronique 100. Par ailleurs, le dispositif électronique 100 peut communiquer avec la station hôte 200 via une liaison 201. Comme décrit plus en détail ultérieurement, la liaison 201 peut être une liaison sans fil courte portée, une liaison sans fil moyenne portée ou une liaison filaire. Selon une variante de réalisation, le dispositif électronique peut être directement connecté à la station hôte 200 au moyen d'un connecteur adapté, la liaison 201 étant constituée par le connecteur dans ce cas.

Par "mémoire de masse", on entend ici une mémoire de grande capacité non volatile qui peut être lue et/ou écrite par un dispositif hôte tel qu'un ordinateur. Par "grande capacité", on entend ici une capacité de stockage non volatile réinscriptible d'au moins 100 Mo, ce qui est supérieur par exemple à la capacité de stockage d'une carte à microcircuit du type carte à puce ou carte SIM. La mémoire de masse 10 se présente préférentiellement sous la forme d'une carte du type comprenant un corps en matière plastique supportant un circuit électronique intégré qui inclut notamment un composant mémoire de grande capacité comme défini ci-avant, la carte comportant en outre des contacts électriques affleurant permettant de connecter le circuit électronique de ladite carte à un dispositif externe tel que le dispositif électronique 100. La mémoire de masse 10 peut être également une clé USB ou tout autre mémoire de masse répondant à la définition donnée ci-avant. La mémoire de masse comprend un espace mémoire 11 organisé par exemple en une pluralité de blocs 110₁ à 110_{N} adressables.

Le dispositif électronique 100 se présente de préférence sous la forme d'un dispositif portable autonome. Comme représenté sur la figure 1, le dispositif électronique 100 présente globalement l'architecture matérielle d'un ordinateur et comprend notamment les éléments suivants:
- une mémoire non volatile 111,
- une unité de traitement ou un microprocesseur 112,
- une mémoire volatile 113,
- une interface de communication filaire 114,
- un connecteur 115 de carte à microcircuit 30,
- un connecteur de carte microSD 116,
- un connecteur de clé USB 117 associé à un contrôleur USB 118,
- une interface de saisie de données d'authentification 119,
- un circuit de communication sans fil courte portée 120,
- un circuit de communication sans fil moyenne portée 121,
- un clavier de touches de commande 122,
- des diodes électroluminescentes 123,
- une alimentation autonome 124.

La station hôte 200 présente l'architecture matérielle d'un ordinateur. Ainsi, la station hôte 200 comprend une mémoire non volatile 221, un microprocesseur 222, une mémoire volatile 223, une interface de communication 224, un écran d'affichage 225 et un clavier 226. Le microprocesseur 222 permet l'exécution de programmes d'ordinateur mémorisés dans la mémoire non volatile 221, en utilisant la mémoire volatile 223. L'interface 224 permet de communiquer, par la liaison 201, avec le dispositif électronique 100. La station hôte 200 peut se présenter sous différentes formes qui seront détaillés ultérieurement.

L'interface 224 peut être une interface de communication filaire et la liaison 201 peut être une liaison filaire. Dans ce cas, l'interface de communication filaire 114 permet au dispositif électronique 100 d'échanger des données et des instructions avec la station hôte 200 via une liaison filaire, un utilisant un protocole de communication propre à la liaison filaire.

Toutefois, la liaison 201 entre le dispositif électronique 100 et la station hôte 200 peut également être une liaison sans fil. Dans ce cas, l'interface 224 est un circuit de communication sans fils permettant de communiquer par une liaison radiofréquence en utilisant les circuits de communication sans fil courte portée 120 ou moyenne portée 121.

Ainsi, quelque soit le type de l'interface 224, le dispositif électronique 100 peut communiquer avec la station hôte 200 en utilisant une liaison 201 de type approprié. Or, chaque type de liaison 201 permet de répondre à des contraintes spécifiques. Le dispositif électronique 100 permet donc d'offrir des fonctionnalités variées à son utilisateur, impliquant des contraintes variées en termes de type de liaison 201.

Le circuit de communication sans fil courte portée 120, qui peut être par exemple un module de communication de proximité NFC ou un réseau corporel (« *Body Area Network »)* dans lequel des signaux passent par le corps d'un utilisateur, comprend un circuit électronique 1201 et une antenne 1202 formée par une série de spires. Il utilise un protocole de communication déterminé.

De même, le circuit de communication moyenne portée 121, par exemple de type Wifi, Zigbee ou Bluetooth, comprend un circuit électronique 1211 et une antenne 1212. Il utilise un autre protocole de communication déterminé.

L'interface de saisie de donnée d'authentification 119 peut correspondre à tout composant ou circuit apte à saisir des données d'authentification tel que notamment un capteur de données biométriques comme, par exemple, une empreinte digitale, rétinienne ou vocale, ou un clavier permettant de saisir un code. Dans l'exemple décrit ici, l'interface de saisie de donnée d'authentification 119 est un capteur d'empreintes digitales.

La carte à microcircuit 30 correspond notamment à une carte à puce au format ID_000, comme par exemple une carte SIM ou "Smart

Card" contenant des moyens de traitement (microcontrôleur) et des moyens de mémorisation (non représentés sur la figure 1).

Une ou plusieurs données d'authentification de référence D_{AF} sont enregistrées dans la carte à microcircuit 30 et/ou dans la mémoire de masse 10. Cette ou ces données d'authentification de référence sont utilisées lors de l'authentification de l'utilisateur.

Le système représenté sur la figure 1 peut être utilisé dans différentes applications. Certaines de ces applications peuvent nécessiter une authentification de l'utilisateur du dispositif électronique 100 pour effectuer une action déterminée. Ci-après, on appel « action sécurisée » une action qui nécessite l'authentification de l'utilisateur avant d'être exécutée par le dispositif électronique 100.

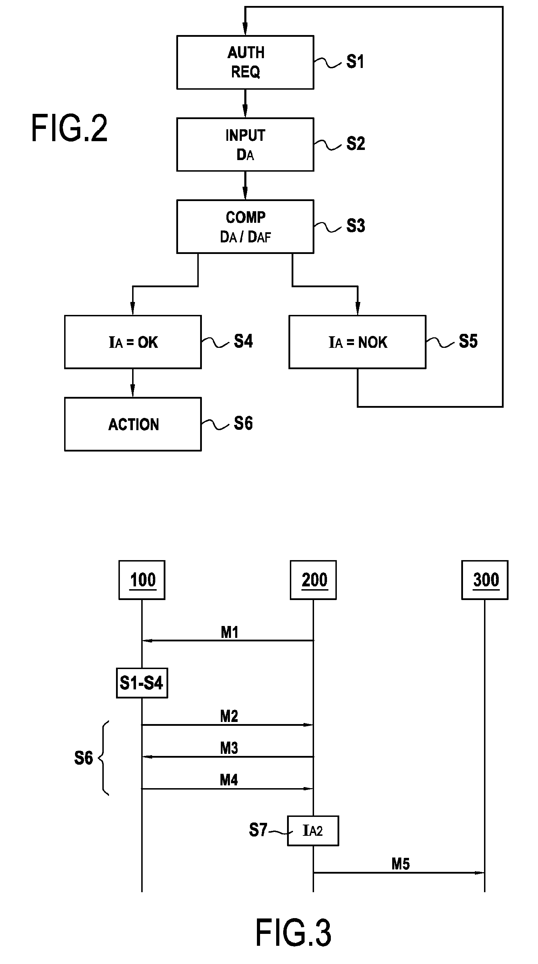

On décrit maintenant en relation avec la **figure 2**, les principales étapes d'un procédé permettant d'authentifier l'utilisateur du dispositif électronique 100.

Au départ, par exemple lors de la mise en marche du dispositif électronique 100 ou lors de la détection d'une station hôte 200, le dispositif électronique 100 demande à l'utilisateur de s'authentifier par exemple en faisant clignoter une ou plusieurs diodes électroluminescentes prévues sur le dispositif 100 (étape S1). L'utilisateur saisit une donnée d'authentification D_{A} au moyen de l'interface de saisie de donnée d'authentification 119 (étape S2). Dans l'exemple décrit ici, l'utilisateur saisit son empreinte digitale sur l'interface 119. La donnée d'authentification de l'utilisateur saisie D_{A}, ici son empreinte digitale, est stockée provisoirement dans la mémoire volatile 113 et comparée par le microprocesseur 112 à la ou aux données d'authentification de référence D_{AF} stockées dans la carte à microcircuit 30 ou dans la mémoire de masse 10 (étape S3). Si la donnée d'authentification saisie D_{A} correspond à une donnée d'authentification de référence, le microprocesseur 112 affecte à un indicateur d'authentification I_{A} d'utilisateur stocké dans la mémoire volatile 113 la valeur "OK" (étape S4). Dans le cas contraire, le microprocesseur 112 affecte à l'indicateur d'authentification I_{A} la valeur "NOK", qui est la valeur par défaut avant toute nouvelle authentification (étape S5). Le dispositif électronique 100 peut alors demander à nouveau à l'utilisateur de s'authentifier en faisant clignoter une nouvelle fois une ou plusieurs des diodes électroluminescentes 123.

En variante, l'indicateur d'authentification I_{A} peut être stocké dans la carte à microcircuit 30. En variante également, à l'étape S2, les données d'authentification D_{A} sont introduites au moyen du clavier 122.

Lorsque l'authentification a réussi (I_{A}=OK), le dispositif électronique exécute une action sécurisée (étape S6). Plusieurs exemples d'actions sécurisées sont donnés ci-après.

Grâce au procédé de la figure 2, l'utilisateur peut contrôler l'exécution de l'action sécurisée. En effet, l'action sécurisée de l'étape S6 n'est exécutée que si l'utilisateur a introduit des données d'authentification correctes. On évite ainsi qu'un tiers ou une station hôte commande l'exécution de l'action sécurisée sans l'accord de l'utilisateur.

La **figure 3** représente une première utilisation du dispositif électronique 100. Dans cette utilisation, le dispositif électronique 100 permet un contrôle d'accès. En effet, la station hôte 200 peut commander l'ouverture d'un passage 300 présentant un état fermé et un état ouvert.

Le passage 300 peut par exemple comprendre une porte à verrou, et la station hôte 200 commande l'ouverture et la fermeture du verrou. En variante, le passage 300 comprend une porte, un portique, une barrière ou tout autre élément dont la position peut être commandée par la station hôte 200 entre une position fermée et une position ouverte.

La station hôte 200 est située à proximité du passage 300 et diffuse de manière régulière un message de présence M1.

Ainsi, lorsque le dispositif électronique 100 reçoit le message M1, par exemple par le circuit de communication 121, il en déduit que le passage 300 est située à proximité. Le dispositif électronique 100 met alors en oeuvre les étapes du procédé d'authentification décrit précédemment en référence à la figure 2.

Dans cet exemple, l'action sécurisée de l'étape S6 de la figure 2 comprend une communication avec la station hôte 200, destinée à authentifier le dispositif électronique 100 vis-à-vis de la station hôte 200.

L'authentification du dispositif électronique 100 vis-à-vis de la station hôte 200 utilise par exemple un système à clé secrète symétrique. Dans ce cas, le dispositif électronique 100 envoie à la station hôte un message M2 incluant un identifiant du dispositif électronique 100. L'identifiant du dispositif électronique 100 est par exemple mémorisé dans la carte à microcircuit 30. En réponse à la réception du message M2, la station hôte 200 envoie un message M3 au dispositif électronique 100 contenant un nombre aléatoire appelé Challenge. En fonction du Challenge reçu dans le message M3 et d'une clé K1 mémorisée dans la carte à microcircuit 30, le dispositif électronique 100 calcule une réponse R. Le calcul de la réponse R peut être effectué par un processeur cryptographique intégré à la carte à microcircuit 30 ou par l'unité de traitement 112. Enfin, le dispositif électronique 100 envoie un message M4 à la station hôte 200 contenant la réponse R.

Dans un système cryptographique symétrique, la station hôte 200 connaît également la clé K1 associée à l'identifiant du message M1. Ainsi, la station hôte 200 peut calculer une réponse R' et la comparer avec la réponse R du message M4.

En cas de correspondance entre R et R', c'est-à-dire en cas d'authentification du dispositif électronique 100 vis-à-vis de la station hôte 200, la station hôte 200 attribue à un indicateur d'authentification I_{A2} du dispositif électronique 100 la valeur OK (étape S7) puis envoie un message M5 au passage 300 pour en commander l'ouverture.

On constate que dans l'utilisation de la figure 3, la station hôte 200 effectue une action sécurisée lorsque le dispositif électronique 100 est authentifié (étape S7), l'authentification du dispositif électronique 100 nécessitant au préalable l'authentification de l'utilisateur (étape S4). Cette double authentification permet une sécurité accrue.

Dans l'exemple décrit, l'action sécurisée du la station hôte 200 est la commande de l'ouverture du passage 300. Toutefois, d'autres actions peuvent être effectuées en variante. Par exemple, la station hôte 200 peut être un ordinateur personnel et la double authentification précitée permet d'autoriser l'accès à la station hôte 200 ou à un serveur distant accessible par la station hôte.

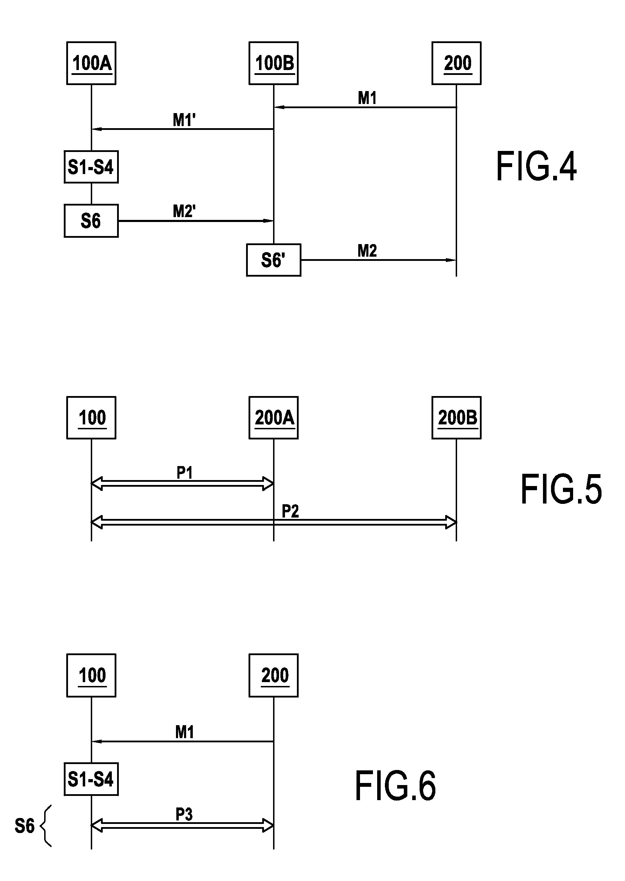

La figure 4 représente une deuxième utilisation qui fait appel à deux dispositifs électroniques 100. Pour faciliter la description, on désigne les dispositifs électroniques 100 de la figure 4 par les références 100A et 100B. Dans cette utilisation, les dispositifs électroniques 100A et 100B communiquent entre eux et une action sécurisée est exécuté par le dispositif électronique 100B seulement en cas d'authentification de l'utilisateur du dispositif électronique 100A.

La station hôte 200 diffuse de manière régulière un message de présence M1.

Ainsi, lorsque le dispositif électronique 100B reçoit le message M1, par exemple par le circuit de communication 121, il en déduit que la station hôte 200 est située à proximité. Le dispositif électronique 100B envoie alors un message M1' de demande d'authentification au dispositif électronique 100A, par exemple par le circuit de communication 121.

En réponse à la réception du message M1', le dispositif électronique 100A met en oeuvre les étapes du procédé d'authentification décrit précédemment en référence à la figure 2.

Dans cet exemple, l'action sécurisée de l'étape S6 de la figure 2 comprend l'envoi d'un message M2' du dispositif électronique 100A vers le dispositif électronique 100B.

En réponse à la réception du message M2', le dispositif électronique 100B effectue, à l'étape S6', une action sécurisée. L'action sécurisée de l'étape S6' peut par exemple comprendre l'authentification du dispositif électronique 100B vis-à-vis de la station hôte 200, comme décrit précédemment en référence à la figure 3. Ce cas est illustré par le message M2 sur la figure 4.

On constate que dans l'utilisation de la figure 4, le dispositif électronique 100B effectue une action sécurisée lorsque l'utilisateur du dispositif électronique 100A est authentifié. Ainsi l'utilisateur d'un dispositif électronique 100A peut contrôler l'exécution d'une action sécurisée par le dispositif électronique 100B.

La **figure 5** représente une troisième utilisation d'un dispositif électronique 100 conforme à l'invention. Ici, le dispositif électronique 100 sert de titre d'accès à un service, par exemple un service de transport en commun. Dans cette utilisation, le dispositif électronique 100 communique successivement avec deux stations hôtes 200. Pour faciliter la description, on désigne les stations hôtes 200 de la figure 5 par les références 200A et 200B.

La station hôte 200A est par exemple un ordinateur personnel, qui peut communiquer avec le dispositif électronique 100 par une liaison 201 sans fil moyenne portée au cours d'une phase P1.

La phase P1 peut comprendre notamment une authentification de l'utilisateur du dispositif électronique 100, une authentification du dispositif électronique 100 vis-à-vis de la station hôte 200A, l'exécution d'un navigateur Internet par la station hôte 200A pour accéder à un serveur distant dont l'adresse est mémorisée dans le dispositif électronique 100, la lecture ou l'écriture de données dans la mémoire de masse 10 par le serveur distant, en passant par l'intermédiaire du navigateur...Ainsi, en utilisant le navigateur de la station hôte 200A, un utilisateur peut obtenir de la part d'un serveur distant un bon d'accès à un service (par exemple un ticket de transport électronique) et le mémoriser dans la mémoire de masse 10.

La station hôte 200B est un lecteur de titre d'accès reliée à un appareil de contrôle d'accès au service, par exemple un portique d'accès d'une station de métro. La station hôte 200B peut communiquer avec le dispositif électronique 100 par une liaison 201 sans fil courte portée au cours d'une phase P2.

La phase P2 peut comprendre une authentification du dispositif électronique 100 vis-à-vis de la station hôte 200B et un envoi de données de la mémoire de masse 10 vers la station hôte 200B.

Dans cet exemple, le dispositif électronique 100 utilise d'une part le circuit de communication sans fil moyenne portée 121 pour communiquer avec la station hôte 200A et d'autre part le circuit de communication sans fil courte portée 120 pour communiquer avec la station hôte 200B. L'utilisation de deux types de liaison différents permet de répondre aux contraintes rencontrées pendant les phases P1 et P2 : Pour obtenir un bon d'accès au service (phase P1), il n'est pas nécessaire de placer le dispositif électronique à proximité immédiate de la station hôte 200A, ce qui facilite les manipulations à effectuer. Par contre, pour valider l'accès au service (phase P2), l'utilisateur doit placer le dispositif électronique 100 à proximité immédiate de la station hôte 200B, ce qui permet de vérifier l'accord explicite de l'utilisateur.

La **figure 6** représente une quatrième utilisation d'un dispositif électronique 100 conforme à l'invention. Des données personnelles de l'utilisateur sont mémorisées dans la mémoire de masse 10 et la station hôte 200 comprend un écran apte à afficher des données.

Le dispositif électronique 100 détecte la station hôte 200, par exemple grâce à un message M1 diffusé par la station hôte 200. Ensuite, l'utilisateur s'authentifie comme décrit précédemment en référence à la figure 2.

Après l'authentification de l'utilisateur, l'action sécurisée de l'étape S6 comprend une communication entre le dispositif électronique 100 et la station hôte 200 pendant une phase P3. Au cours de la phase P3, des données personnelles mémorisées dans la mémoire de masse 10 sont transmises à la station hôte 200 et affichées sur l'écran de la station hôte 200. Par exemple, le dispositif électronique 100 implémente un serveur web auquel accède la station hôte 200. La communication entre le dispositif électronique 100 et la station hôte 200 peut être cryptée, par exemple un utilisant une clé K1 mémorisée dans la carte à microcircuit 30. La communication entre le dispositif électronique 100 et la station hôte 200 peut utiliser le circuit de communication 120 ou 121, en fonction des contraintes de l'application considérée.

Si plusieurs stations hôtes 200 sont présentes dans le rayon de portée du circuit de communication 120 ou 121 considéré, les données personnelles peuvent être affichées par chaque station hôte. En variante, une station hôte 200 est sélectionnée lors d'une procédure d'appariement précédent la phase P3, les données personnelles étant communiquées lors de la phase P3 uniquement à la station hôte 200 sélectionnée.

Le dispositif électronique 100 peut afficher le nombre de station hôte 200 qu'il détecte, par exemple en utilisant les diodes 123 ou un afficheur numérique non représenté. Cela permet à l'utilisateur de savoir s'il risque de transmettre des données personnelles vers un écran qui n'est pas dans son champ de vision.

La procédure d'appariement peut par exemple comprendre la détection mutuelle des circuits de communications courte portée présents dans le dispositif électronique 100 et la station hôte 200, la communication de la P3 étant effectuée avec les circuits de communication moyenne portée.

En variante, l'appariement peut être réalisé de la manière suivante :
- L'utilisateur commande (par exemple à l'aide du clavier 122) l'émission, par le dispositif électronique 100, d'un signal de reconnaissance d'écran.
- La station hôte 200 qui reçoit ce signal de reconnaissance affiche un message de reconnaissance sur son écran.
- Si l'écran qui affiche un message de reconnaissance est celui que l'utilisateur désire sélectionner, l'utilisateur valide l'appariement (par exemple à l'aide du clavier 122).

L'utilisateur peut commander l'affichage du message de reconnaissance sur plusieurs écrans et valider l'appariement de plusieurs écrans. Dans ce cas, ses données personnelles transmises pendant la phase P3 sont affichées sur plusieurs écrans.

Un même dispositif électronique 100 peut avantageusement servir à mettre en oeuvre les différentes utilisations décrites en références aux figures 3 à 6, ainsi qu'éventuellement d'autres utilisations. En effet, le dispositif électronique 100 est conçu pour pouvoir s'adapter à des contraintes variées permettant de mettre en oeuvre des fonctionnalités variées. En particulier, le dispositif électronique 100 permet une authentification de l'utilisateur et/ou du dispositif électronique 100 pour plusieurs services variés. De plus, des données personnelles de l'utilisateur sont mémorisées dans la mémoire de masse 10. Ainsi, le dispositif électronique 100 constitue en quelque sorte le « moi virtuel » de l'utilisateur.

Les étapes décrites ci-avant et en particulier les étapes S1 à S6 correspondent à des instructions de programme d'ordinateur qui sont stockées de préférence, mais non exclusivement, dans la mémoire non volatile 111 afin d'être exécutées par le microprocesseur 112 à l'aide de la mémoire volatile 113.

Il est remarquable que le dispositif électronique 100 n'est pas un téléphone mobile. Autrement dit, le dispositif électronique 100 est indépendant d'un réseau de téléphonie.

Des paramètres de configuration du dispositif électronique 100 sont mémorisés dans la mémoire non volatile 111 et/ou dans la mémoire volatile 113. Les paramètres de configuration indiquent par exemple la définition de la fonction des boutons, les actions sécurisées pour lesquelles une authentification est nécessaire,...

Dans un mode de réalisation, lorsque le dispositif électronique 100 est relié à une station hôte 200, par exemple lorsque le dispositif électronique 100 est relié par le connecteur USB 117 à une station hôte 200 de type ordinateur personnel, la station hôte 200 exécute automatiquement un fichier mémorisé dans le dispositif électronique 100 (par exemple un fichier « Autorun.inf»). Ce fichier comprend des instructions permettant de modifier les paramètres de configuration précités. Par exemple, ce fichier comprend des instructions d'exécution d'un navigateur Internet par la station hôte 200 pour contacter un serveur de configuration d'adresse prédéterminée, le serveur de configuration pouvant envoyer des paramètres de configuration modifiés.

## Revendications

1. Dispositif électronique (100, 100A, 100B) comprenant un module de communication apte à échanger des messages avec une entité externe (100A, 100B, 200, 200A, 200B), **caractérisé en ce que** le module de communication comprend au moins un premier circuit de communication (114, 120, 121) apte échanger des messages en utilisant un premier protocole de communication et un deuxième circuit de communication (114, 120, 121) apte à échanger des messages en utilisant un deuxième protocole de communication différent du premier protocole de communication.

2. Dispositif électronique (100, 100A) selon la revendication 1, comprenant :
- un module d'acquisition de données d'authentification (119, 122) introduites par un utilisateur,
- une unité de traitement (112) apte à déterminer un indicateur d'authentification (I_{A}) de l'utilisateur en fonction desdites données d'authentification (D_{A}), et
- un module d'exécution d'une action sécurisée configuré pour exécuter ladite action sécurisée uniquement si ledit indicateur d'authentification (I_{A}) de l'utilisateur présente une valeur prédéterminée.

3. Dispositif électronique (100, 100A) selon la revendication 2, dans lequel ladite action sécurisée comprend une communication, par ledit module de communication, avec une entité externe (100B, 200, 200A, 200B).

4. Dispositif électronique (100) selon la revendication 3, dans lequel ladite communication comprend l'envoi de données mémorisées dans une mémoire (10) accessible au dispositif électronique (100) vers une station hôte (200) apte à afficher lesdites données.

5. Dispositif électronique (100) selon la revendication 4, comprenant un module d'affichage (123) apte à afficher le nombre de stations hôtes (200) détectées par le module de communication.

6. Dispositif électronique (100) selon la revendication 3, dans lequel ladite communication comprend l'envoi d'un message cryptographique (M4) vers une station hôte (200).

7. Système comprenant un dispositif électronique (100) selon la revendication 6 et une station hôte (200), dans lequel la station hôte (200) comprend :
- un module de réception du message cryptographique (M4),
- un module d'évaluation d'un indicateur d'authentification (I_{A2}) du dispositif électronique (100) en fonction du message cryptographique, et
- un module d'exécution d'une deuxième action sécurisée configuré pour exécuter ladite deuxième action sécurisée uniquement si ledit indicateur d'authentification (I_{A2}) du dispositif électronique (100) présente une valeur prédéterminée.

8. Système selon la revendication 7, dans lequel la deuxième action sécurisée comprend la commande de l'ouverture d'un passage (300) présentant un état fermé et un état ouvert.

9. Système comprenant un premier dispositif électronique (100A) selon la revendication 3 et un deuxième dispositif électronique (100B), dans lequel l'action sécurisée du premier dispositif électronique (100A) comprend l'envoi d'un message d'authentification (M2') au deuxième dispositif électronique (100B), le deuxième dispositif électronique (100B) comprenant un module d'exécution d'une action sécurisée configuré pour exécuter ladite action sécurisée en réponse à la réception dudit message d'authentification (M2').

10. Dispositif électronique (100B) selon la revendication 1, comprenant :
- un module d'envoi d'un message d'interrogation d'authentification (M1'),
- un module de réception d'un message d'authentification (M2'),
- un module d'exécution d'une action sécurisée configuré pour exécuter ladite action sécurisée en réponse à la réception dudit message d'authentification (M2').

11. Dispositif électronique selon la revendication 1, comprenant une mémoire de masse (10) de capacité égale ou supérieure à 100Mo.

12. Dispositif électronique selon la revendication 1, comprenant :
- un module de détection d'une station hôte (200) en utilisant le premier module de communication (120), et
- un module d'envoi de données vers la station hôte détectée (200) en utilisant le deuxième module de communication (120).

13. Dispositif électronique selon la revendication 1, **caractérisé en ce qu'**il est indépendant d'un réseau de téléphonie.

14. Procédé de communication mis en oeuvre par un dispositif électronique (100, 100A, 100B) comprenant un module de communication apte à échanger des messages avec une entité externe (100A, 100B, 200, 200A, 200B), **caractérisé en ce que** le module de communication comprend au moins un premier circuit de communication (114, 120, 121) apte échanger des messages en utilisant un premier protocole de communication et un deuxième circuit de communication (114, 120, 121) apte à échanger des messages en utilisant un deuxième protocole de communication différent du premier protocole de communication, le procédé de communication comprenant un échange de messages avec une entité externe en utilisant le premier ou le deuxième circuit de communication.

15. Procédé de communication selon la revendication 14, comprenant :
- une étape (S2) d'acquisition de données d'authentification (D_{A}) introduites par un utilisateur,
- une étape (S3, S4) de détermination d'un indicateur d'authentification (I_{A}) de l'utilisateur en fonction desdites données d'authentification (D_{A}), et
- un étape (S6) d'exécution d'une action sécurisée si ledit indicateur d'authentification (I_{A}) de l'utilisateur présente une valeur prédéterminée.

16. Programme d'ordinateur comportant des instructions pour l'exécution des étapes du procédé de communication selon l'une des revendications 14 à 15 lorsque ledit programme est exécuté par un ordinateur.

17. Support d'enregistrement lisible par un ordinateur sur lequel est enregistré un programme d'ordinateur comprenant des instructions pour l'exécution des étapes du procédé de communication selon l'une quelconque des revendications 14 à 15.
